# EUROPÄISCHE PATENTSCHRIFT

(11) **EP 3 440 921 B1**
(45) Veröffentlichungstag und Bekanntmachung des Hinweises auf die Patenterteilung: **26.08.2020**
(21) Anmeldenummer: 18170477.6
(22) Anmeldetag: 03.05.2018
(51) Int. Cl.: A01D 89/00, A01D 61/00

(54) **MITNEHMEREINHEIT FÜR EINEN ROTATIONSFÖRDERER, MITNAHMEFINGER UND ROTATIONSFÖRDERER**
CARRYING FINGER, ROTATABLE TRANSPORTING DEVICE AND DRIVING UNIT FOR A ROTATABLE TRANSPORTING DEVICE
UNITÉ D'ENTRAÎNEMENT POUR UN CONVOYEUR ROTATIF, DOIGT D'ENTRAÎNEMENT ET CONVOYEUR ROTATIF

(30) Priorität: 10.08.2017 DE 102017118252
(43) Veröffentlichungstag der Anmeldung: 13.02.2019
(73) Patentinhaber: CLAAS Selbstfahrende Erntemaschinen GmbH, 33428 Harsewinkel (DE)
(72) Erfinder: Dahlke, Christan, 33332 Gütersloh (DE); Liedmeier, Stefan, 49479 Ibbenbüren (DE); Bergmann, Michael, 33442 Herzbebrock-Clarholz (DE); Eidhoff, Lukas, 33378 Rheda-Wiedenbrück (DE)
(74) Vertreter: CLAAS Gruppe

(56) Entgegenhaltungen:
- EP-A1- 1 712 121
- EP-A2- 2 712 495
- DE-B- 1 214 464

## Beschreibung

Die Erfindung betrifft eine Mitnehmereinheit für einen Rotationsförderer mit einem Mitnahmefinger als Mitnehmer von Fördergut und einem Haltekörper zum Anbringen des Mitnahmefingers an dem Rotationsförderer. Die Erfindung betrifft ferner einen Mitnahmefinger für eine solche Mitnehmereinheit sowie einen Rotationsförderer.

Mitnehmereinheiten der hier angesprochenen Art sind aus der EP 2 712 495 A2 oder der DE 1 159 351 A bekannt und sind dort in einem Rotationsförderer einer Erntemaschine genutzt. Die EP 1 712 121 A1 offenbart eine Mitnehmereinheit mit einem exzentrischen Sicherungselement und einem zentrischen Verriegelungsabschnitt, um den Mitnahmefinger am Haltekörper der Mitnehmereinheit zu fixieren.

Die Mitnahmefinger der Mitnehmereinheiten sind an dem Rotationsförderer montiert und dienen dazu, die Aufnahme von Erntegut zu unterstützen, welches durch den Rotationsförderer beispielsweise zu einem Dreschwerk der Erntemaschine gefördert wird. Die Mitnahmefinger sind jeweils mittels eines Haltekörpers an einer exzentrisch zur Mittelachse des Rotationsförderers angeordneten Steuerachse angeordnet und ragen durch Öffnungen im Mantel des Rotationsförderers nach außen hervor. Durch die exzentrische Lagerung der Mitnahmefinger ist es bewirkt, dass die Mitnahmefinger je nach Drehlage des Rotationsförderers mehr oder weniger nach außen herausragen und damit je nach Anwendungssituation eine Aufnahme des Ernteguts oder eine Abgabe des Ernteguts begünstigt ist.

In der Praxis hat es sich gezeigt, dass es durch eine ungewollte Aufnahme von Steinen oder anderer Objekte beim Fördern von Erntegut mittels des Rotationsförderers zu einem Bruch der Mitnahmefinger kommen kann. Die beschädigten Mitnahmefinger sind dann auszutauschen. Der Austausch der Mitnahmefinger ist bisher relativ aufwendig und bedarf Werkzeuge.

Es ist eine Aufgabe der Erfindung, eine Mitnehmereinheit mit den eingangs genannten Merkmalen bereit zu stellen, welche auf alternative Art und Weise eine Befestigung des Mitnahmefingers an dem Haltekörper ermöglicht. Insbesondere soll durch die Befestigung des Mitnahmefingers an dem Haltekörper ein Austausch des Mitnahmefingers ohne Einsatz von Werkzeugen vorgenommen werden können. Insbesondere soll ferner die Befestigung einer hohen Krafteinwirkung, wie beispielsweise im Einsatz der Mitnehmereinheit in einem Rotationsförderer einer Erntemaschine auftritt, standhalten, ohne dass es zu einem Lösen des Mitnahmefingers von dem Haltekörper kommt.

Diese Aufgabe wird mit einer Mitnehmereinheit gelöst, welche die Merkmale des Anspruches 1 aufweist. Ferner wird zur Lösung der Aufgabe ein Rotationsförderer mit den Merkmalen des Anspruches 11 vorgeschlagen. Vorteilhafte Ausführungsformen und/oder Ausgestaltungen und/oder Aspekte der Erfindung ergeben sich aus den Unteransprüchen, der nachfolgenden Beschreibung und den Figuren.

Eine grundlegende Mitnehmereinheit, beispielsweise für einen Rotationsförderer, hat einen Mitnahmefinger als Mitnehmer von Fördergut, wie beispielsweise Erntegut, und einen Haltekörper zum Anbringen des Mitnahmefingers an dem Rotationsförderer. Es ist vorgesehen, dass der Haltekörper eine Einsteckaufnahme aufweist, in welcher der Mitnahmefinger mit einem Endabschnitt eingesteckt ist. Es ist ferner vorgesehen, dass die Mitnehmereinheit ein Sicherungselement hat, welches den Mitnahmefinger gegen ein Lösen aus der Einsteckaufnahme sichert, wobei das Sicherungselement einen exzentrisch zu einer Achse des Sicherungselementes, beispielsweise einer Mittelachse, angeordneten Abschnitt nutzt, um den Mitnahmefinger in der Einsteckaufnahme zu halten. Insbesondere ist die Achse des Sicherungselementes orthogonal oder im Wesentlichen orthogonal zu der Längsachse des Mitnahmefingers angeordnet.

Bei einer solchen Mitnehmereinheit ist ein Austausch des Mitnahmefingers gegen einen anderen Mitnahmefinger in einfacher Weise durch Herausziehen des Mitnahmefingers aus der Einsteckaufnahme möglich. Dazu ist lediglich der exzentrisch angeordnete Abschnitt, welcher nachfolgend auch als exzentrischer Abschnitt bezeichnet ist, aus seiner Wirkposition im Hinblick auf den Mitnahmefinger zu bringen, in welcher der Abschnitt eine Sicherungsfunktion ausübt. Der Ausbau des Mitnahmefingers, beispielsweise im Rahmen des Austausches gegen den anderen Mitnahmefinger, kann dadurch ohne Werkzeug durch eine Person vorgenommen werden. Zugleich ist durch die vorgeschlagene Steckverbindung zusammen mit der Sicherung eine Befestigung des Mitnahmefingers an dem Haltekörper realisiert, welche auch etwaigen hohen Lösekräften standhält.

In diese Richtung zielen auch die technischen Merkmale der erfinderischen Mitnehmereinheit, wonach der exzentrische Abschnitt ein Verriegelungsabschnitt ist, welcher in eine Vertiefung, insbesondere Aussparung, des Mitnahmefingers bzw. des Endabschnittes des Mitnahmefingers eingreift, um den Mitnahmefinger in der Einsteckaufnahme lagefixiert zu verriegeln. Dadurch ist der Mitnahmefinger in der Einsteckaufnahme mittels des exzentrischen Abschnittes gegen ein Herausziehen formschlüssig gesichert.

Nach einer Ausführungsform oder Ausgestaltung der Mitnehmereinheit ist das Sicherungselement an dem Haltekörper um die Achse drehbar gelagert, insbesondere drehbar aufgenommen, und durch eine Drehbewegung des Sicherungselementes um die Achse der exzentrische Abschnitt von einer Entriegelungsposition in eine Verriegelungsposition gegenüber dem Mitnahmefinger gebracht. Diese Maßnahme zielt darauf ab, einen Wechsel des Mitnahmefingers in montagemäßig einfacher Weise ausführen zu können. Hierzu ist das Sicherungselement lediglich durch eine Drehbewegung von der Verriegelungsposition in die Entriegelungsposition zu bringen. In der Entriegelungsposition kann der Mitnahmefinger dann aus der Einsteckaufnahme an dem Haltekörper herausgezogen werden. Bei einem Einbau des Mitnahmefingers an dem Haltekörper kann in gleicher Weise vorgegangen werden um die Sicherung herzustellen. Es ist dann jedoch eine entgegengesetzte Drehbewegung auszuführen, um das den exzentrischen Abschnitt von der Entriegelungsposition in die Verriegelungsposition zu bringen.

Beispielsweise ist es vorgesehen, dass in der Verriegelungsposition der exzentrische Abschnitt in die Einsteckaufnahme seitlich eingreift und die Symmetrieachse des exzentrischen Abschnitts von der Achse des Sicherungselements soweit beabstandet ist, dass in der Entriegelungsposition die Einsteckaufnahme von dem exzentrischen Abschnitt freigegeben ist. Es kann dazu der exzentrische Abschnitt in der Entriegelungsposition außerhalb der Einsteckaufnahme liegen. Insbesondere liegen diese Achsen, nämlich die Achse des Sicherungselementes und die Symmetrieachse des exzentrischen Abschnitts, achsparallel zueinander.

Bei einer möglichen Ausgestaltung ist das Sicherungselement als Bolzen oder Stift ausgebildet, welcher an wenigstens einem, vorzugsweise beiden seiner Endbereiche gegen den Haltekörper aufgelagert ist und zwischen den Endbereichen einen Zwischenbereich aufweist, der den exzentrischen Abschnitt ausbildet. Dadurch ist eine sichere und haltbare Lagerung des Sicherungselementes an dem Haltekörper begünstigt und zugleich durch den Zwischenabschnitt der exzentrische Abschnitt ausgebildet. Insbesondere bilden die Endbereiche Lagerstellen zum drehbaren Auflagern an dem Haltekörper aus.

Der exzentrische Abschnitt kann im Querschnitt rund, insbesondere kreisrund, sein und im Durchmesser kleiner als der runde, insbesondere kreisrunde Querschnitt wenigstens eines der Endbereiche sein. Beispielsweise liegt im Querschnitt gesehen, der Außenumfang des exzentrischen Abschnittes zumindest teilweise auf dem Außenumfang des Endbereiches des Sicherungselementes. Es ist durch diese Maßnahmen ein technisch einfacher Aufbau der Mitnehmereinheit begünstigt. Durch die rundliche Ausgestaltung in Bezug auf den Querschnitt des exzentrischen Abschnittes ist ferner eine leichtgängige Verriegelung gegen den Mitnahmefinger begünstigt.

Nach einer weiteren Ausführungsform oder Ausgestaltung der Mitnehmereinheit ist es vorgesehen, dass der Endabschnitt des Mitnahmefingers eine Schrägfläche aufweist, durch welche sich der Endabschnitt zum zugehörigen Ende hin verjüngt. Es ist insbesondere vorgesehen, dass die Einsteckaufnahme hierzu korrespondierend ausgebildet ist, insbesondere eine Gegenschrägfläche aufweist. Dadurch ist eine Maßnahme in Richtung einer spielfreien Befestigung des Mitnahmefingers an dem Haltekörper ergriffen. Durch die spielfreie Befestigung begünstigt eine lange Lebensdauer der Verbindung, insbesondere da ein Ausschlagen vermieden ist. Beispielsweise ist die Schrägfläche dadurch gebildet, dass der Endabschnitt des Mitnahmefingers konusförmig ausgebildet ist. Die Gegenschrägfläche der Einsteckaufnahme kann in entsprechender Weise konusförmig ausgebildet sein, also eine Gegenkonusform aufweisen.

Eine weitere Ausführungsform oder Ausgestaltung der Mitnehmereinheit sieht vor, dass das Sicherungselement mit einem Betätigungsteil verbunden ist oder ein Betätigungsteil an dem Sicherungselement angeformt ist, insbesondere das Sicherungselement mit dem Betätigungsteil starr verbunden ist, so dass durch Betätigung des Betätigungsteils der exzentrische Abschnitt in Wirkstellung gegen den Mitnahmefinger gebracht ist. Auch diese Maßnahme zielt darauf ab, den Montagefinger von dem Haltekörper werkzeugslos demontieren und bevorzugt auch werkzeuglos anmontieren zu können. Durch das Betätigungsteil ist eine Handhabe realisiert, welche ein händisches Betätigen des Sicherungselementes ermöglicht. Beispielsweise ist durch händische Betätigung des Betätigungsteils der exzentrische Abschnitt von der Verriegelungsposition in die Entriegelungsposition oder umgekehrt von der Entriegelungsposition in die Verriegelungsposition zu bringen, insbesondere eine entsprechende Drehbewegung des Sicherungselementes um die Achse bzw. dessen Mittelachse auszuführen.

Es kann vorgesehen sein, dass das Betätigungsteil als federelastisch wirkender Bügel oder federelastisch wirkende Muffe ausgebildet ist und das Betätigungsteil unter Ausbildung einer Vorspannkraft derart an dem Haltekörper in eine Arretierposition gebracht ist, dass wenigstens eine Kraftkomponente der Vorspannkraft eine Druckkraft auf den exzentrischen Abschnitt in Richtung zu der Einsteckaufnahme und/oder in Richtung gegen den eingesteckten Endabschnitt des Mitnahmefingers ausübt. Dadurch ist eine Maßnahme ergriffen, welche die Sicherung des Mitnahmefingers gegen ein Lösen aus der Einsteckaufnahme und eine spielfreie Fixierung des Mitnahmefingers an dem Haltekörper unterstützt.

Nach einer weiteren Ausführungsform oder Ausgestaltung der Mitnehmereinheit ist es vorgesehen, dass der Haltekörper eine Durchgangsöffnung zur Aufnahme einer Steuerwelle oder Steuerachse aufweist. Insbesondere sind die Längsachse der Einsteckaufnahme und/oder die Längsachse des Mitnahmefingers radial zu der Mittelachse der Durchgangsöffnung angeordnet. Es ist insbesondere vorgesehen, dass das Betätigungsteil den Haltekörper um die Durchgangsöffnung herum zumindest teilweise umgreift. Ergänzend oder alternativ kann das Betätigungsteil gegen einen Umfangsabschnitt des Haltekörpers verschnappt sein. Dadurch ist der Haltekörper im Bereich der Durchgangsöffnung, insbesondere im Bereich der Berandung der Durchgangsöffnung, genutzt, um das Betätigungsteil in eine Endposition, wie beispielsweise die Arretierposition zu bringen.

Es kann vorgesehen sein, dass das Betätigungsteil einen Endabschnitt aufweist, der in der Arretierposition von dem Haltekörper nach außen weg steht, und der Haltekörper wenigstens einen, vorzugsweise zwei nach außen wegstehende Vorsprünge aufweist, von denen jeweils einer zusammen mit dem Endabschnitt des Betätigungsteils Greifflächen beispielsweise für einen handgeführten Pinzettengriff hat, um das Betätigungsteil aus der Arretierposition heraus oder in die Arretierposition hinein zu bringen. Dadurch ist ein werkzeugloses Betätigen des Betätigungsteils begünstigt. Durch die Vorsprünge an dem Haltekörper ist ein Aufbringen von Gegenkräften ermöglicht, um das Betätigungsteil beispielsweise aus seiner Schnappverbindung gegen den Haltekörper werkzeuglos zu lösen oder umgekehrt, um eine solche Schnappverbindung herzustellen.

Nach einem weiteren Aspekt der Erfindung ist ein Mitnahmefinger vorgesehen, welcher als Mitnahmefinger in der vorstehend beschriebenen Mitnehmereinheit genutzt werden kann. Der Mitnahmefinger hat einen stabförmigen Grundkörper, beispielsweise mit rundem oder eckigem Querschnitt, wobei der Grundkörper an einem Endabschnitt umfangsseitig eine Vertiefung und/oder eine Schrägfläche aufweist. Durch die Schrägfläche verjüngt sich der Grundkörper im Querschnitt zum zugehörigen Ende hin. Die Schrägfläche kann als Konus ausgebildet sein.

Nach einem nochmals weiteren Aspekt der Erfindung ist ein Rotationsförderer, beispielsweise einer Erntemaschine, vorgesehen. Der Rotationsförderer hat eine Vielzahl von Mitnehmereinheiten, von denen wenigstens eine die vorstehend beschriebene Mitnehmereinheit ist.

Durch die Erfindung kann ein werkzeugloser Wechsel der Mitnahmefinger an dem Haltekörper der Mitnehmereinheit durchgeführt werden. Dazu wird zur Befestigung des Mitnahmefingers an dem Haltekörper eine Steckverbindung und eine Sicherung gegen Lösen der Steckverbindung genutzt. Die Sicherung wird händisch herbeigeführt, wobei das dazu genutzte Sicherungselement durch eine Klemmverbindung gegenüber dem Haltekörper arretiert ist oder arretiert werden kann, wenn es eine Sicherungsfunktion ausübt. Durch die vorgeschlagene Befestigung des Mitnahmefingers an dem Haltekörper kann der Mitnahmefinger schnell und einfach ausgetauscht werden. Zugleich ist der Mitnahmefinger an dem Haltkörper spielfrei zu fixieren.

Weitere Einzelheiten und Merkmale der Erfindung ergeben sich aus der nachfolgenden Beschreibung eines Ausführungsbeispiels anhand der Zeichnungen.

Es zeigen:
- Fig. 1: eine mögliche Ausführungsform einer Mitnehmereinheit für einen Rotationsförderer mit einem Mitnahmefinger und einem den Mitnahmefinger haltenden Haltekörper in perspektivischer Darstellung,
- Fig. 2: eine mögliche Ausführungsform einer Erntemaschine mit einem Rotationsförderer, in welchem die Mitnehmereinheit der Figur 1 zum Einsatz kommt, in schematischer Darstellung,
- Fig. 3: die Mitnehmereinheit der Figur 1 in einer Explosionsdarstellung und
- Fig. 4A, 4B und 4C: jeweils die Mitnehmereinheit der Figur 1 in einer Schnittdarstellung, wobei verschiedene Phasen der Demontage des Mitnahmefingers von dem Haltkörper veranschaulicht sind.

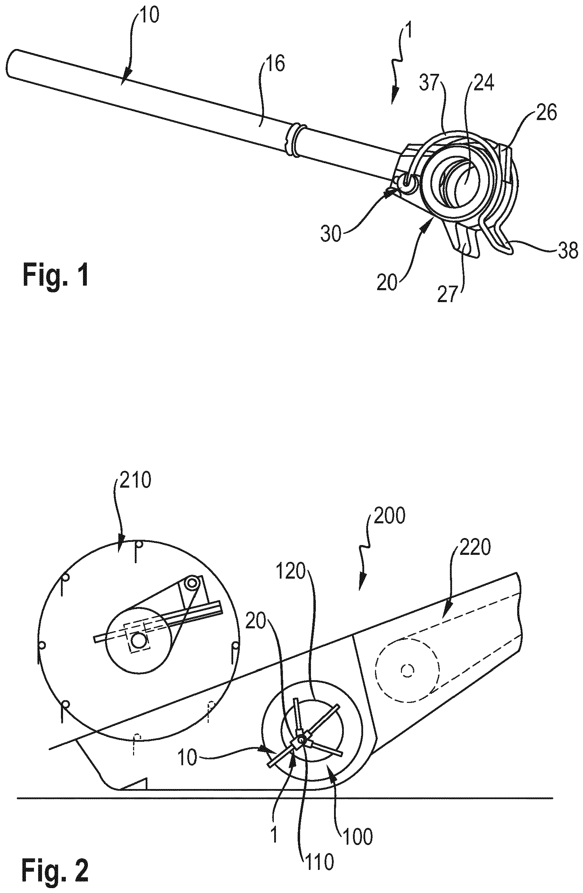

Figur 1 zeigt - in schematischer Darstellung - eine mögliche Ausführungsform einer Mitnehmereinheit 1 mit einem Mitnahmefinger 10 und einem Haltekörper 20. Die Mitnehmereinheit 1 kann in einem Rotationsförderer 100 zum Einsatz kommen, wie er beispielsweise in Figur 2 dargestellt ist. Der Rotationsförderer 100 ist dort ein Bestandteil einer Erntemaschine 200, wie beispielsweise einem Mähdrescher, und beispielsweise im Bereich des Schneidwerks der Erntemaschine angeordnet. Der Rotationsförderer 100 dient zum Weitertransportieren abgeschnitten Erntegutes, welches beispielsweise von einer Haspeleinheit 210 kommt. Mittels des Rotationsförderers 100 wird das Erntegut beispielsweise einer weiteren Fördereinrichtung 220, beispielsweise einem Querförderer, zugeführt.

Der Rotationsförderer 100 weist eine Vielzahl von Mitnehmereinheiten auf, von denen wenigstens eine die Mitnehmereinheit 1 der Figur 1 sein kann. Bei dem Rotationsförderer 100 ist der Haltekörper 20 der Mitnehmereinheit 1 auf einer Steuerwelle 110 gelagert, welche exzentrisch zu der Mittelachse des Rotationsförderers 100 angeordnet ist. Es ist dadurch erreicht, dass bei einer Rotation des Rotationsförderers 100 der Mitnahmefinger 10 je nach Drehlage des Rotationsförderers 100 relativ gegenüber seinem Außenmantel 120 mehr oder weniger nach außen hervorsteht. Insofern sind je nach Drehlage des Rotationsförderers 100 die Mitnahmefinger 1 gegenüber dem Außenmantel 120 aus- oder eingefahren. Auf diese Weise ist das Aufnehmen des Erntegutes und das Abgeben des Erntegutes erleichtert.

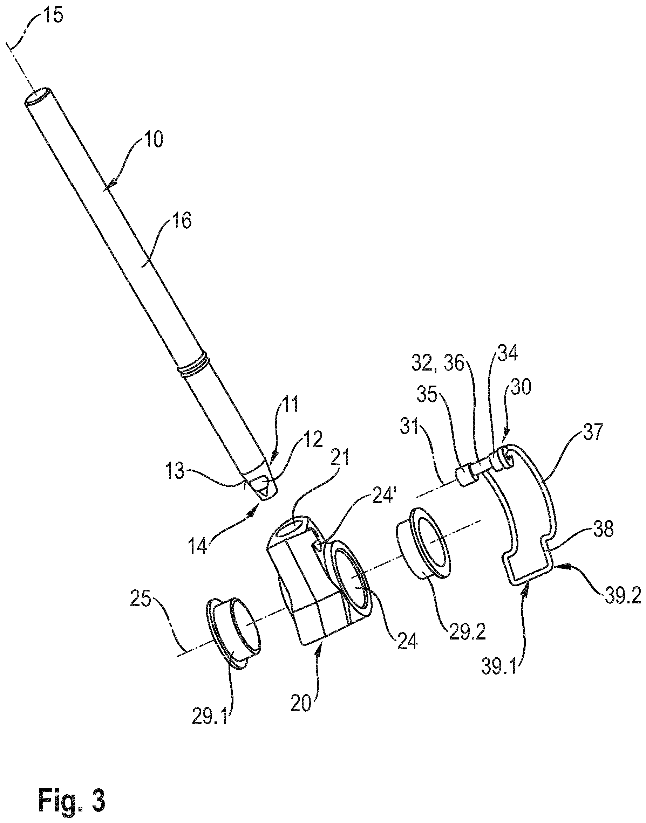

Figur 3 zeigt in einer Explosionsdarstellung die Bestandteile und den Aufbau der Mitnehmereinheit 1. Der Haltekörper 20 weist beispielsweise eine Durchgangsöffnung 24 auf, beispielsweise um darin die Steuerwelle 110 des Rotationsförderers 100 der Figur 2 aufnehmen zu können. Bevorzugt ist der Mitnahmefinger 10 mit seiner Längsachse 15 radial zu der Mittelachse 25 der Durchgangsöffnung 24 an dem Haltekörper 20 angeordnet. Bevorzugt ist der Haltekörper 20 als Schwenklager im Hinblick auf eine Steuerwelle, wie beispielsweise die Steuerwelle 110 des Rotationsförderers 100 der Figur 2 ausgebildet. Dazu können wenigstens eine, vorzugsweise zwei Lagerbuchsen 29.1, 29.2 vorgesehen sein, welche jeweils stirnseitig in die Durchgangsöffnung 24 des Haltekörpers 20 eingebracht sind und beispielsweise mit einem nach außen überstehenden Bund stirnseitig in Anlage gegen die Berandung der Durchgangsöffnung 24 gebracht sind.

Der Haltekörper 20 hat eine Einsteckaufnahme 21, in welcher der Mitnahmefinger 10 mit einem Endabschnitt 11 eingesteckt ist bzw. eingesteckt werden kann. Bevorzugt erstreckt sich die Einsteckaufnahme 21 mit ihrer Längsachse 23 radial zu der Mittelachse 25 der Durchgangsöffnung. Die Mitnehmereinheit 1 weist ferner ein Sicherheitselement 30 auf, welches zum Sichern des Mitnahmefingers 10 gegen ein Lösen aus der Einsteckaufnahme 21 dient. Dazu weist das Sicherungselement 30 einen Abschnitt 32 auf, welcher exzentrisch zu einer Achse 31 des Sicherungselementes 30, insbesondere der Mittelachse des Sicherungselementes 30, angeordnet ist und zum lagefixierten Halten des Mitnahmefingers 10 in der Einsteckaufnahme 21 dient. Bevorzugt ist das Sicherungselement 30 an dem Haltekörper 20 um die Achse 31 drehbar gelagert, beispielsweise in einer Durchgangsöffnung 24' aufgenommen. Das Sicherungselement 30 kann dazu als Bolzen oder Stift ausgebildet sein, welcher an seinen beiden Endbereichen 34, 35 gegen den Haltekörper 20 aufgelagert ist und zwischen den Endbereichen 34, 35 ein Zwischenbereich 36 aufweist, der den exzentrischen Abschnitt 32 ausbildet.

Bevorzugt ist das Sicherungselement 30 mit einem Betätigungsteil 37 verbunden, insbesondere starr verbunden, durch dessen Betätigung eine Drehbewegung des Sicherungselementes 30 gegenüber dem Haltekörper 20 bewirkt wird. Bevorzugt ist das Betätigungsteil 37 als federelastisch wirkender Bügel oder federelastisch wirkende Muffe ausgebildet, welcher gegen einen die Durchgangsöffnung 24 umgebenden Umfangsabschnitt des Haltekörpers 20 unter Bildung einer Federkraft verschnappen kann. Zum Betätigen weist das Betätigungsteil 37 einen nach außen weg stehenden Endabschnitt 38 auf, welcher von beiden Seiten ergreifbar ist, bevorzugt an einer oder jeder der beiden Seiten eine Greiffläche 39.1, 39.2 aufweist.

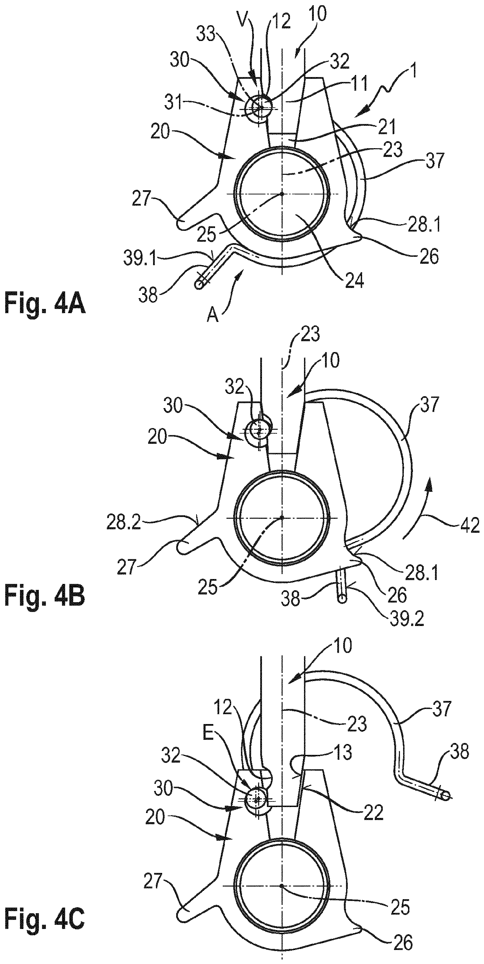

Figuren 4A, 4B und 4C zeigen beispielshaft mehrere Montagezustände, welche bei einer Demontage des Mitnahmefingers 10 von dem Haltekörper 20 auftreten. In der Figur 4A ist der Mitnahmefinger 10 mit seinem Endabschnitt 11 in die Einsteckaufnahme 21 an dem Haltekörper 20 eingeführt und es befindet sich der exzentrische Abschnitt 32 in einer Verriegelungsposition V gegenüber dem Mitnahmefinger 10. Für die Verriegelung kann an dem Endabschnitt 11 des Mitnahmefingers 10 eine Vertiefung 12 vorgesehen sein. In der Verriegelungsposition V greift der exzentrische Abschnitt 32 beispielsweise mit einem Außenwandungsabschnitt in die Vertiefung 12 des Mitnahmefingers 10 ein, um damit den Mitnahmefinger 10 in der Einsteckaufnahme 21 lagefixiert zu verriegeln.

In der Verriegelungsposition V befindet sich das Betätigungsteil 37 in einer Arretierposition A, in welcher das Betätigungsteil 37 den Haltekörper 20 um die Durchgangsöffnung 24 herum vorzugsweise schellenförmig umgreift bzw. umschnappt. Durch die federelastische Wirkung des Betätigungsteils 37 ist das Betätigungsteil 37 in der Arretierposition A derart vorgespannt, dass die Vorspannkraft eine Druckkraft auf den exzentrischen Abschnitt 32 in Richtung zu der Einsteckaufnahme 21 bzw. in Richtung gegen den eingesteckten Endabschnitt 11 des Mitnahmefingers 10 ausübt.

Um den Mitnahmefinger 10 von dem Haltekörper 20 lösen zu können, ist das Betätigungsteil 37 aus der Arretierposition A herauszubringen. Dazu weist das Betätigungsteil 37 den nach außen wegstehenden Endabschnitt 38 auf und an dem Haltekörper 20 ist im Bereich des Außenumfangs um die Durchgangsöffnung 24 ein nach außen wegstehender Vorsprung 26 vorgesehen. Der Vorsprung 26 weist eine Greiffläche 28.1 auf, welche zusammen mit der Greiffläche 39.1 am Endabschnitt 38 des Betätigungsteils 37 für einen handgeführten Pinzettengriff eines Benutzers genutzt werden kann, um das Betätigungsteil 37 aus der Arretierposition A herauszubringen. Dazu werden durch eine Betätigungskraft der Endabschnitt 38 und der Vorsprung 26 in Richtung zueinander gedrückt. Nach Verlassen der Arretierposition A ist das Betätigungsteil 37 bevorzugt ohne Vorspannkraft.

Mittels des Endabschnitts 38 ist an dem Betätigungsteil 37 eine Handhabe bzw. ein Griffteil realisiert, an welchem das Betätigungsteil 37 um die Achse 31 des Sicherungselementes 30 händisch gedreht werden kann. Dies erfolgt im Zuge einer Öffnungsbewegung gemäß Pfeil 42, wie aus der Figur 4B ersichtlich ist. Dadurch wird der exzentrische Abschnitt 32 von der Verriegelungsposition V in eine Entriegelungsposition E gebracht, welche in der Figur 4C dargestellt ist. In der Entriegelungsposition E ist die Einsteckaufnahme 21 von dem exzentrischen Abschnitt 32 freigegeben, insbesondere es liegt der exzentrische Abschnitt 32 außerhalb der Einsteckaufnahme 21. Dazu sind die Symmetrieachse 33 des exzentrischen Abschnitts 32 von der Achse 31 des Sicherungselements 30 entsprechend beabstandet angeordnet. In der Entriegelungsposition E ist die Sicherung mittels des Sicherungselementes 30 aufgehoben und der Mitnahmefinger 10 kann aus der Einsteckaufnahme 21 herausgezogen werden. Es ist dann der Mitnahmefinger 10 von dem Haltekörper 20 demontiert. Dieser Demontagevorgang des Mitnahmefingers 10 ist werkzeuglos, insbesondere vollständig werkzeuglos durchgeführt.

In gleicher Weise, nur in umgekehrter Reihenfolge, kann der Mitnahmefinger 10 wiederum an den Haltekörper 20 eingebaut werden. Dazu wird der Mitnahmefinger 10 mit seinem Endabschnitt 11 in die Einsteckaufnahme 21 an dem Haltekörper 20 eingeführt und in seine Endlage in der Einsteckaufnahme 21 gebracht. Anschließend wird das sich in der Offenstellung befindliche Betätigungsteil 37 um die Achse 31 in Richtung zu der Arretierposition A verschwenkt, wodurch es zu einer exzentrischen Rotationsbewegung des exzentrischen Abschnittes 32 von der Entriegelungsposition E in die Verriegelungsposition V kommt. Das Betätigungsteil 37 wird solange um die Achse 31 in Richtung der Arretierposition A verschwenkt, bis es unter Ausbildung einer Vorspannkraft zu einem teilweisen Übergriff des Haltekörpers 20 um die Durchgangsöffnung 24 kommt und eine Schnappverbindung gebildet ist. Dazu werden einerseits der Endabschnitt 38 des Betätigungsteils 37 und anderseits ein weiterer nach außenstehender Vorsprung 27 an dem Haltekörper 20 ergriffen und durch eine Greiffläche 28.2 des Vorsprungs 27 der Vorsprung 27 und der Endabschnitt 38 relativ zueinander in Richtung auf einander zu gedrückt. Nach dem Übergreifen unter Aufbau der Vorspannung ist das Betätigungsteil 37 in die Arretierposition A gebracht, in der das Betätigungsteil 37 seine Vorspannkraft als Druckkraft auf das Sicherungselement 30 bzw. den exzentrischen Abschnitt 32 ausübt.

Wie insbesondere aus den Figuren 3 und 4A bis 4C ersichtlich ist, kann der Endabschnitt 11 des Mitnahmefingers 10 eine Schrägfläche 13 aufweisen, durch welche sich der Endabschnitt 12 zum zugehörigen Ende 14 hin verjüngt. Bevorzugt ist die Einsteckaufnahme 21 in entsprechender Weise ausgebildet und weist eine Gegenschrägfläche 22 auf. Bevorzugt ist die Schrägfläche 13 durch einen Konus gebildet, wobei die Gegenschrägfläche 22 in entsprechender Weise einen Gegenkonus bildet. Bevorzugt ist der Endabschnitt 11 mit der Schrägfläche 13 an einem länglichen Grundkörper 16 des Mitnahmefingers 10 ausgebildet. Bevorzugt ist daran auch die Vertiefung 12 ausgebildet.

In der vorliegenden Beschreibung bedeutet die Bezugnahme auf einen bestimmten Aspekt oder eine bestimmte Ausführungsform oder eine bestimmte Ausgestaltung, dass ein bestimmtes Merkmal oder eine bestimmte Eigenschaft, die in Verbindung mit dem jeweiligen Aspekt oder der jeweiligen Ausführungsform oder der jeweiligen Ausgestaltung beschrieben ist, zumindest dort enthalten ist, aber nicht notwendigerweise in allen Aspekten oder Ausführungsformen oder Ausgestaltungen der Erfindung enthalten sein muss. Es wird ausdrücklich darauf hingewiesen, dass jede Kombination der verschiedenen Merkmale und/oder Strukturen und/oder Eigenschaften, welche in Bezug auf die Erfindung beschrieben sind, von der Erfindung umfasst sind, sofern dies nicht ausdrücklich oder eindeutig durch die angehängten Ansprüche widerlegt ist.

Die Verwendung von einzelnen oder allen Beispielen oder einer beispielhaften Ausdrucksweise im Text soll lediglich die Erfindung beleuchten und stellt keine Beschränkung hinsichtlich des Umfangs der Erfindung dar, wenn nichts anders behauptet wird. Auch ist keine Ausdrucksweise oder Formulierung der Beschreibung so zu verstehen, dass es sich um ein nicht beanspruchtes, aber für die Praxis der Erfindung wesentliches Element handelt.

### Bezugszeichenliste

- 1: Mitnehmereinheit

- 10: Mitnahmefinger
- 11: Endabschnitt
- 12: Vertiefung
- 13: Schrägfläche
- 14: Ende
- 15: Längsachse
- 16: Grundkörper

- 20: Haltekörper
- 21: Einsteckaufnahme
- 22: Gegenschrägfläche
- 23: Längsachse
- 24: Durchgangsöffnung
- 24': Durchgangsöffnung
- 25: Mittelachse
- 26: Vorsprung
- 27: Vorsprung
- 28.1: Greiffläche
- 28.2: Greiffläche
- 29.1: Lagerbuchse
- 29.2: Lagerbuchse

- 30: Sicherungselement
- 31: Achse
- 32: exzentrischer Abschnitt
- 33: Symmetrieachse
- 34: Endbereich
- 35: Endbereich
- 36: Zwischenbereich
- 37: Betätigungsteil
- 38: Endabschnitt
- 39.1: Greiffläche
- 39.2: Greiffläche
- 42: Pfeil

- 100: Rotationsförderer
- 110: Steuerwelle
- 120: Mantel

- 200: Erntemaschine
- 210: Haspeleinheit
- 220: Fördereinrichtung

- E: Entriegelungsposition
- V: Verriegelungsposition
- A: Arretierposition

## Patentansprüche

1. Mitnehmereinheit (1) für einen Rotationsförderer (100) mit einem Mitnahmefinger (10) als Mitnehmer von Fördergut und einem Haltekörper (20), geeignet zum Anbringen des Mitnahmefingers (10) an dem Rotationsförderer (100), wobei der Haltekörper (20) eine Einsteckaufnahme (21) aufweist, in welcher der Mitnahmefinger (10) mit einem Endabschnitt (11) eingesteckt ist, und mit einem Sicherungselement (30), welches den Mitnahmefinger (10) gegen ein Lösen aus der Einsteckaufnahme (21) sichert, wobei das Sicherungselement (30) einen exzentrisch zu einer Achse (31) des Sicherungselementes (30) angeordneten Abschnitt (32) nutzt, um den Mitnahmefinger (10) in der Einsteckaufnahme (21) zu halten, **gekennzeichnet dadurch, dass** der exzentrische Abschnitt (32) ein Verriegelungsabschnitt ist, welcher in eine Vertiefung (12) des Mitnahmefingers (10) eingreift, um den Mitnahmefinger (10) in der Einsteckaufnahme (21) lagefixiert zu verriegeln.

2. Mitnehmereinheit nach Anspruch 1, **dadurch gekennzeichnet, dass** das Sicherungselement (30) an dem Haltekörper (20) um die Achse (31) drehbar gelagert ist und durch eine Drehbewegung des Sicherungselementes (30) um die Achse (31) der exzentrische Abschnitt (32) von einer Entriegelungsposition (E) in eine Verriegelungsposition (V) gegenüber dem Mitnahmefinger (10) gebracht ist.

3. Mitnehmereinheit nach Anspruch 2, **dadurch gekennzeichnet, dass** in der Verriegelungsposition (V) der exzentrische Abschnitt (32) in die Einsteckaufnahme (21) seitlich eingreift und die Symmetrieachse (33) des exzentrischen Abschnitts (32) von der Achse (31) des Sicherungselements (30) soweit beabstandet ist, dass in der Entriegelungsposition (E) die Einsteckaufnahme (21) von dem exzentrischen Abschnitt (32) freigegeben ist.

4. Mitnehmereinheit nach einem der vorhergehenden Ansprüche, **dadurch gekennzeichnet, dass** das Sicherungselement (30) als Bolzen oder Stift ausgebildet ist, welcher an wenigstens einem, vorzugsweise beiden seiner Endbereiche (34, 35) gegen den Haltekörper (20) aufgelagert ist und zwischen den Endbereichen (34, 35) ein Zwischenbereich (36) aufweist, der den exzentrischen Abschnitt (32) ausbildet.

5. Mitnehmereinheit nach einem der vorhergehenden Ansprüche, **dadurch gekennzeichnet, dass** der Endabschnitt (11) des Mitnahmefingers (10) eine Schrägfläche (13) aufweist, durch welche sich der Endabschnitt (11) zum zugehörigen Ende (14) hin verjüngt, und die Einsteckaufnahme (21) hierzu korrespondierend ausgebildet ist.

6. Mitnehmereinheit nach einem der vorhergehenden Ansprüche, **dadurch gekennzeichnet, dass** das Sicherungselement (30) mit einem Betätigungsteil (37) starr verbunden oder daran angeformt ist, so dass durch dessen Betätigung der exzentrische Abschnitt (32) in Wirkstellung gegen den Mitnahmefinger (10) gebracht ist.

7. Mitnehmereinheit nach Anspruch 6, **dadurch gekennzeichnet, dass** das Betätigungsteil (37) als federelastisch wirkender Bügel oder federelastisch wirkende Muffe ausgebildet ist, welches unter Ausbildung einer Vorspannkraft derart an dem Haltekörper (20) in eine Arretierposition (A) gebracht ist, dass wenigstens eine Kraftkomponente der Vorspannkraft eine Druckkraft auf den exzentrischen Abschnitt (32) in Richtung zu der Einsteckaufnahme (21) und/oder in Richtung gegen den eingesteckten Endabschnitt (11) des Mitnahmefingers (10) ausübt.

8. Mitnehmereinheit nach Anspruch 6 oder 7, **dadurch gekennzeichnet, dass** der Haltekörper (20) eine Durchgangsöffnung (24), geeignet zur Aufnahme einer Steuerwelle (110) oder Steuerachse, aufweist, die Längsachse (23) der Einsteckaufnahme (21) und/oder die Längsachse (15) des Mitnahmefingers (10) radial zu der Mittelachse (25) der Durchgangsöffnung (24) angeordnet sind und das Betätigungsteil (37) den Haltekörper (20) um die Durchgangsöffnung (24) herum zumindest teilweise umgreift, insbesondere gegen einen Umfangsabschnitt des Haltekörpers (20) verschnappt ist.

9. Mitnehmereinheit nach Anspruch 7 oder 8, **dadurch gekennzeichnet, dass** das Betätigungsteil (37) einen Endabschnitt (38) aufweist, der in der Arretierposition (A) von dem Haltekörper (20) nach außen weg steht, und der Haltekörper (20) wenigstens einen, vorzugsweise zwei nach außen wegstehende Vorsprünge (26, 27) aufweist, von denen jeweils einer zusammen mit dem Endabschnitt (38) des Betätigungsteils (37) Greifflächen (28.1, 39.1; 28.2, 39.2) für einen handgeführten Pinzettengriff hat, um das Betätigungsteil (37) aus der Arretierposition (A) heraus oder in die Arretierposition (A) hinein zu bringen.

10. Mitnehmereinheit nach einem der vorhergehenden Ansprüche, **dadurch gekennzeichnet, dass** der Mitnahmefinger (10) einen stabförmigen Grundkörper (16) hat, welcher an einem Endabschnitt (11) umfangsseitig eine Vertiefung (12) und/oder eine Schrägfläche (13) aufweist, wobei durch die Schrägfläche (13) sich der Grundkörper (16) zum zugehörigen Ende (14) hin im Querschnitt verjüngt.

11. Rotationsförderer (100), beispielsweise einer Erntemaschine (200), mit einer Vielzahl von Mitnehmereinheiten, von denen wenigstens eine Mitnehmereinheit (1) nach einem der Ansprüche 1 bis 10 ausgebildet ist.

## Claims

1. An entrainment unit (1) for a rotary conveyor (100) comprising an entrainment finger (10) as an entrainment means for conveyed material and a holding body (20) suitable for mounting the entrainment finger (10) to the rotary conveyor (100), wherein the holding body (20) has an insertion mounting (21) in which the entrainment finger (10) is inserted with an end portion (11) and comprising a securing element (30) which secures the entrainment finger (10) to prevent release from the insertion mounting (21), wherein the securing element (30) uses a portion (32) arranged eccentrically relative to an axis (31) of the securing element (30) to hold the entrainment finger (10) in the insertion mounting (21), **characterised in that** the eccentric portion (32) is a locking portion which engages into a recess (12) in the entrainment finger (10) to lock the entrainment finger (10) in a fixed position in the insertion mounting (21).

2. An entrainment unit according to claim 1 **characterised in that** the securing element (30) is mounted to the holding body (20) rotatably about the axis (31) and the eccentric portion (32) is moved from an unlocking position (E) into a locking position (V) relative to the entrainment finger (10) by a rotary movement of the securing element (30) about the axis (31).

3. An entrainment unit according to claim 2 **characterised in that** in the locking position (V) the eccentric portion (32) laterally engages into the insertion mounting (21) and the axis of symmetry (33) of the eccentric portion (32) is so spaced from the axis (31) of the securing element (30) that in the unlocking position (E) the insertion mounting (21) is released from the eccentric portion (32).

4. An entrainment unit according to one of the preceding claims **characterised in that** the securing element (30) is in the form of a bolt or pin which is mounted at at least one and preferably both of its end regions (34, 35) against the holding body (20) and between the end regions (34, 35) has an intermediate region (36) constituting the eccentric portion (32).

5. An entrainment unit according to one of the preceding claims **characterised in that** the end portion (11) of the entrainment finger (10) has an inclined surface (13), by which the end portion (11) tapers towards the associated end (14) and the insertion mounting (21) is of a configuration corresponding thereto.

6. An entrainment unit according to one of the preceding claims **characterised in that** the securing element (30) is rigidly connected to an actuating portion (37) or is formed thereon so that by actuation thereof the eccentric portion (32) is moved into an operative position against the entrainment finger (10).

7. An entrainment unit according to claim 6 **characterised in that** the actuating portion (37) is in the form of a resiliently acting hoop or resiliently acting sleeve which is moved into an arresting position (A) with the production of a prestressing force against the holding body (20) in such a way that at least one force component of the prestressing force exerts a pressure force on the eccentric portion (32) in the direction towards the insertion mounting (21) and/or in a direction opposite the inserted end portion (11) of the entrainment finger (10).

8. An entrainment unit according to claim 6 or claim 7 **characterised in that** the holding body (20) has a through opening (24) suitable for receiving a control shaft (110) or control spindle, the longitudinal axis (23) of the insertion mounting (21) and/or the longitudinal axis (15) of the entrainment finger (10) are arranged radially relative to the central axis (25) of the through opening (24) and the actuating portion (37) at least partially embraces the holding body (20) around the through opening (24), and in particular is snapped against a peripheral portion of the holding body (20).

9. An entrainment unit according to claim 7 or claim 8 **characterised in that** the actuating portion (37) has an end portion (38) projecting outwardly away from the holding body (20) in the arresting position (A) and the holding body (20) has at least one and preferably two outwardly projecting projections (26, 27), a respective one of which together with the end portion (38) of the actuating portion (37) has gripping surfaces (28.1, 39.1; 28.2, 39.2) for hand-guided pinching grip to move the actuating portion (37) out of the arresting position (A) or into the arresting position (A).

10. An entrainment unit according to one of the preceding claims **characterised in that** the entrainment finger (10) has a bar-shaped main body (16) which at an end portion (11) has at its circumference a recess (12) and/or an inclined surfaced (13), wherein the inclined surface (13) provides that the main body (16) tapers in cross-section towards the associated end (14).

11. A rotary conveyor (100), for example a harvester (200), having a plurality of entrainment units, of which at least one entrainment unit (1) is designed according to one of claims 1 to 10.

## Revendications

1. Unité d'entraînement (1) pour un convoyeur rotatif (100), comprenant un doigt d'entraînement (10) faisant fonction de moyen d'entraînement de produit entraîné et comprenant un corps de maintien (20) permettant de monter le doigt d'entraînement (10) sur le convoyeur rotatif (100), le corps de maintien (20) comportant un logement d'insertion (21) dans lequel le doigt d'entraînement (10) est inséré par une portion d'extrémité (11), et comprenant un élément de blocage (30) qui empêche le doigt d'entraînement (10) de sortir du logement d'insertion (21), l'élément de blocage (30) utilisant une portion (32) disposée excentriquement par rapport à un axe (31) de l'élément de blocage (30) pour maintenir le doigt d'entraînement (10) dans le logement d'insertion (21), **caractérisée en ce que** la portion excentrique (32) est une portion de verrouillage qui pénètre dans un renfoncement (12) du doigt d'entraînement (10) pour verrouiller le doigt d'entraînement (10) en position fixe dans le logement d'insertion (21).

2. Unité d'entraînement selon la revendication 1, **caractérisée en ce que** l'élément de blocage (30) est monté sur le corps de maintien (20) à rotation autour de l'axe (31) et, par un mouvement tournant de l'élément de blocage (30) autour de l'axe (31), la portion excentrique (32) est amenée d'une position de déverrouillage (E) vers une position de verrouillage (V) par rapport au doigt d'entraînement (10).

3. Unité d'entraînement selon la revendication 2, **caractérisée en ce que**, dans la position de verrouillage (V), la portion excentrique (32) pénètre latéralement dans le logement d'insertion (21), et l'axe de symétrie (33) de la portion excentrique (32) est suffisamment distant de l'axe (31) de l'élément de blocage (30) pour que, dans la position de déverrouillage (E), le logement d'insertion (21) soit libéré de la portion excentrique (32).

4. Unité d'entraînement selon une des revendications précédentes, **caractérisée en ce que** l'élément de blocage (30) est conformé en goujon ou en broche qui, à au moins une, de préférence à ses deux zones d'extrémité (34, 35), est en appui contre le corps de maintien (20) et comporte, entre les zones d'extrémité (34, 35), une zone intermédiaire (36) qui forme la portion excentrique (32).

5. Unité d'entraînement selon une des revendications précédentes, **caractérisée en ce que** la portion d'extrémité (11) du doigt d'entraînement (10) comporte une surface inclinée (13) par l'intermédiaire de laquelle la portion d'extrémité (11) se rétrécit vers l'extrémité associée (14), et le logement d'insertion (21) est conformé de manière correspondante.

6. Unité d'entraînement selon une des revendications précédentes, **caractérisée en ce que** l'élément de blocage (30) est solidarisé à une partie d'actionnement (37) ou est surmoulé sur celle-ci, de sorte que, lors de son actionnement, la portion excentrique (32) est amenée en position active contre le doigt d'entraînement (10).

7. Unité d'entraînement selon la revendication 6, **caractérisée en ce que** la partie d'actionnement (37) est conçue sous la forme d'un étrier à effet ressort ou d'un manchon à effet ressort qui, en créant une force de précontrainte, est amené dans une position d'immobilisation (A) contre le corps de maintien (20), de sorte qu'au moins une composante de force de la force de précontrainte exerce une force de pression sur la portion excentrique (32) en direction du logement d'insertion (21) et/ou en direction de la portion d'extrémité insérée (11) du doigt d'entraînement (10) .

8. Unité d'entraînement selon la revendication 6 ou 7, **caractérisée en ce que** le corps de maintien (20) est pourvu d'une ouverture traversante (24) permettant de recevoir un arbre d'entraînement (110) ou un axe d'entraînement, l'axe longitudinal (23) du logement d'insertion (21) et/ou l'axe longitudinal (15) du doigt d'entraînement (10) est disposé radialement par rapport à l'axe médian (25) de l'ouverture traversante (24), et la partie d'actionnement (37) entoure au moins partiellement le corps de maintien (20) autour de l'ouverture traversante (24), en particulier est encliquetée sur une portion périphérique du corps de maintien (20).

9. Unité d'entraînement selon la revendication 7 ou 8, **caractérisée en ce que** la partie d'actionnement (37) comporte une portion d'extrémité (38) qui, dans la position d'immobilisation (A), dépasse du corps de maintien (20 vers l'extérieur, et le corps de maintien (20) comporte au moins une, de préférence deux saillies (26, 27) dépassant vers l'extérieur, dont respectivement chacune possède, conjointement avec la portion d'extrémité (38) de la partie d'actionnement (37), des surfaces de préhension (28.1, 39.1 ; 28.2, 39.2) pour une prise en pince manuelle afin de sortir la partie d'actionnement (37) de la position d'immobilisation (A) ou de l'amener dans la position d'immobilisation (A).

10. Unité d'entraînement selon une des revendications précédentes, **caractérisée en ce que** le doigt d'entraînement (10) possède un corps de base en forme de barre (16) qui, en périphérie, comporte à une portion d'extrémité (11) un renfoncement (12) et/ou une surface inclinée (13), le corps de base (16) se rétrécissant en section transversale vers l'extrémité associée (14) du fait de la surface inclinée (13).

11. Convoyeur rotatif (100), par exemple d'une machine de récolte (200), comprenant une pluralité d'unités d'entraînement dont au moins une unité d'entraînement (1) est conçue selon une des revendications 1 à 10.
